# EUROPÄISCHE PATENTSCHRIFT

(11) **EP 1 856 160 B1**
(45) Veröffentlichungstag und Bekanntmachung des Hinweises auf die Patenterteilung: **02.09.2009**
(21) Anmeldenummer: 06708491.3
(22) Anmeldetag: 23.02.2006
(51) Int. Cl.: C08F 2/24, B01F 3/08

(54) **VERFAHREN ZUR HERSTELLUNG EINER WÄSSRIGEN POLYMERISATDISPERSION**
PROCESS FOR PREPARING AN AQUEOUS ADDITION-POLYMER DISPERSION
PROCEDE DE PRODUCTION D'UNE DISPERSION POLYMERE

(30) Priorität: 24.02.2005 DE 102005008868
(43) Veröffentlichungstag der Anmeldung: 21.11.2007
(73) Patentinhaber: BASF SE, 67056 Ludwigshafen (DE)
(72) Erfinder: GASCHLER, Wolfgang, 67063 Ludwigshafen (DE); DANNER, Thomas, 67167 Erpolzheim (DE); BAUDER, Andreas, 68199 Mannheim (DE); FUNKHAUSER, Steffen, 68519 Viernheim (DE); HAMERS, Christoph, 67071 Ludwigshafen (DE)
(86) Internationale Anmeldenummer: PCT/EP2006/060239
(87) Internationale Veröffentlichungsnummer: WO 2006/089939

(56) Entgegenhaltungen:
- EP-A- 1 262 225
- WO-A-20/04030799
- US-A- 5 326 484

## Beschreibung

Gegenstand der vorliegenden Erfindung ist ein Verfahren zur Herstellung einer wässrigen Polymerisatdispersion durch radikalisch initiierte Polymerisation wenigstens eines ethylenisch ungesättigten Monomeren in Anwesenheit eines Dispergierhilfsmittels sowie gegebenenfalls eines gering in Wasser löslichen organischen Lösemittels in einem wässrigem Medium, wobei wenigstens eine Teilmenge des ethylenisch ungesättigten Monomeren und gegebenenfalls des gering in Wasser löslichen organischen Lösemittels im wässrigen Medium als disperse Phase mit einem mittleren Tröpfchendurchmesser ≤ 1000 nm (Miniemulsion) vorliegt, welches dadurch gekennzeichnet ist, dass zur Herstellung der Miniemulsion zuerst eine Rohemulsion mit einem mittleren Tröpfchendurchmesser ≥ 2 µm, enthaltend wenigstens Teilmengen an Wasser, Dispergierhilfsmittel, ethylenisch ungesättigtem Monomeren sowie gegebenenfalls gering in Wasser löslichem organischem Lösemittel, hergestellt wird, welche anschließend durch wenigstens eine mikroporöse Membran mit einem mittleren Porendurchmesser ≤ 1000 nm geleitet wird.

Verfahren zur Herstellung wässriger Polymerisatdispersionen durch radikalische Polymerisation von ethylenisch ungesättigten Monomeren, welche, gegebenenfalls gemeinsam mit einem gering in Wasser löslichen Lösemittel, in einem wässrigen Medium als disperse Phase mit einer mittleren Tröpfchengröße ≤ 1000 nm (Miniemulsion) vorliegen, sind dem Fachmann hinreichend bekannt [siehe hierzu beispielsweise P.L. Tang, E.D. Sudol, C.A. Silebi und M.S. EI-Aasser in Journal of Applied Polymer Science, Vol. 43, S. 1059 bis 1066 (1991) oder K. Landfester, Macromol. Rapid Commun. Vol 22, S. 896 bis 936 (2001)]. Diesen Verfahren gemeinsam ist, dass zuerst aus den ethylenisch ungesättigten Monomeren, Dispergierhilfsmittel und Wasser sowie gegebenenfalls gering in Wasser löslichem organischen Lösemittel und weiteren Hilfsmitteln durch Mischen eine Monomerenrohemulsion mit einem mittleren Tröpfchendurchmesser ≥ 2 µm hergestellt wird, welche in einem anschließenden Verfahrensschritt unter hohem Energieeintrag, beispielsweise mittels hochdrehenden Drehkranzdispergatoren, Hochdruckhomogenisatoren oder Ultraschall, in eine Monomerenminiemulsion mit einem mittleren Tröpfchendurchmesser ≤ 1000 nm überführt wird. Nachteilig an diesen bekannten Verfahren ist die technisch aufwendige Herstellung der Monomerenminiemulsion verbunden mit einem hohen mechanischen Verschleiß der verwendeten Apparate sowie der für Herstellung der Monomerenminiemulsion erforderliche hohe Energieaufwand.

Der vorliegenden Erfindung lag die Aufgabe zugrunde, ein neues Verfahren zur Herstellung von wässrigen Polymerisatdispersionen ausgehend von wässrigen Rohemulsionen ethylenisch ungesättigter Monomerer bereitzustellen.

Überraschender Weise wurde die Aufgabe durch das eingangs definierte Verfahren gelöst.

Verfahrenswesentlich ist, dass zur Herstellung der Monomerenminiemulsion zuerst eine Rohemulsion mit einem mittleren Tröpfchendurchmesser ≥ 2 µm, enthaltend wenigstens Teilmengen an Wasser, Dispergierhilfsmittel, ethylenisch ungesättigtem Monomeren sowie gegebenenfalls gering in Wasser löslichem organischem Lösemittel als disperse Phase, hergestellt wird. Häufig wird eine Rohemulsion hergestellt, welche die Hauptmenge an Wasser und die Gesamtmengen an Dispergierhilfsmittel, ethylenisch ungesättigten Monomeren sowie gegebenenfalls gering in Wasser löslichem organischen Lösemittel enthält.

Als ethylenisch ungesättigte Monomere für die radikalisch initiierte Polymerisation kommen insbesondere in einfacher Weise radikalisch polymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 20, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl-, -2-ethylhexyl- oder stearylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien und Isopren. Die genannten Monomere bilden in der Regel die Hauptmonomeren, die, bezogen auf die Gesamtmonomerenmenge, einen Anteil von mehr als 50 Gew.-%, bevorzugt mehr als 80 Gew.-% auf sich vereinen. In aller Regel weisen diese Monomeren in Wasser bei Normalbedingungen [20°C, 1 atm = 1,01 bar (absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall werden die vorgenannten Monomeren lediglich als modifizierende Monomere in Mengen, bezogen auf die Gesamtmonomerenmenge, von weniger als 10 Gew.-%, bevorzugt weniger als 5 Gew.-% eingesetzt.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylengtykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester, wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen von bis 10 zu Gew.-%, bevorzugt jedoch weniger als 5 Gew.-%, jeweils bezogen auf die Gesamtmonomerenmenge, verwendet.

Erfindungsgemäß besonders günstig einsetzbare Monomerenmischungen sind solche, die
- 50 bis 99,9 Gew.-%: Ester der Acryl- und/oder Methacrylsäure mit 1 bis 20 C-Atome aufweisenden Alkanolen, oder
- 50 bis 99,9 Gew.-%: Styrol und/oder Butadien, oder
- 50 bis 99,9 Gew.-%: Vinylchlorid und/oder Vinylidenchlorid, oder
- 40 bis 99,9 Gew.-%: Vinylacetat, Vinylpropionat, Vinylester der Versaticsäure und/oder Vinylester langkettiger Fettsäuren
enthalten.

Insbesondere sind erfindungsgemäß solche Monomerenmischungen einsetzbar, die
- 0,1 bis 5 Gew.-%: wenigstens eine 3 bis 6 C-Atome aufweisende α,β-monoethylenisch ungesättigte Mono- und Dicarbonsäure und/oder deren Amid und
- 50 bis 99,9 Gew.-%: wenigstens ein Ester der Acryl- und/oder Methacrylsäure mit 1 bis 20 C-Atome aufweisenden Alkanolen, oder
- 0,1 bis 5 Gew.-%: wenigstens eine 3 bis 6 C-Atome aufweisende α,β-monoethylenisch ungesättigte Mono- und Dicarbonsäure und/oder deren Amid und
- 50 bis 99,9 Gew.-%: Styrol und/oder Butadien, oder
- 0,1 bis 5 Gew.-%: wenigstens eine 3 bis 6 C-Atome aufweisende α,β-monoethylenisch ungesättigte Mono- und Dicarbonsäure und/oder deren Amid und
- 50 bis 99,9 Gew.-%: Vinylchlorid und/oder Vinylidenchlorid, oder
- 0,1 bis 5 Gew.-%: wenigstens eine 3 bis 6 C-Atome aufweisende α,β-monoethylenisch ungesättigte Mono- und Dicarbonsäure und/oder deren Amid und
- 40 bis 99,9 Gew.-%: Vinylacetat, Vinylpropionat, Vinylester der Versaticsäure und/oder Vinylester langkettiger Fettsäuren
enthalten.

Entsprechend werden durch die radikalische Polymerisation Polymerisate erhalten, welche aus vorgenannten Monomeren in einpolymerisierter Form aufgebaut sind.

Auch sei an dieser Stelle festgehalten, dass im Rahmen dieser Schrift der Begriff ethylenisch ungesättigtes Monomer auch Mischungen ethylenisch ungesättigter Monomerer und der Begriff Polymerisat auch Copolymerisate umfassen soll.

Die Gesamtmenge an ethylenisch ungesättigten Monomeren in der wässrigen Rohemulsion beträgt in der Regel ≥ 30 und < 90 Gew.-%, häufig ≥ 40 und ≤ 85 Gew.-% und oft ≥ 50 und ≤ 80 Gew.-%.

Die nach dem erfindungsgemäßen Verfahren eingesetzten Dispergierhilfsmittel können prinzipiell Emulgatoren und/oder Schutzkolloide sein.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420.

Selbstverständlich können auch Gemische aus Schutzkolloiden und/oder Emulgatoren eingesetzt werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, S. 192 bis 208.

Erfindungsgemäß werden als Dispergierhilfsmittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: C₄ bis C₁₂) sowie ethoxylierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxylate, EO-Grad: 3 bis 8), Lutensol^{®} AO-Marken (C₁₃C₁₅-Oxoalkoholethoxylate, EO-Grad: 3 bis 30), Lutensol^{®} AT-Marken (C₁₆C₁₈. Fettalkoholethoxylate, EO-Grad: 11 bis 80), Lutensol^{®} ON-Marken (C₁₀-Oxoalkoholethoxylate, EO-Grad: 3 bis 11) und die Lutensol^{®} TO-Marken (C₁₃-Oxoalkoholethoxylate, EO-Grad: 3 bis 20) der Fa. BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel (I) 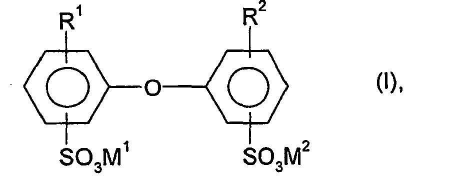 worin R¹ und R² H-Atome oder C₄- bis C₂₄-Alkyl bedeuten und nicht gleichzeitig H-Atome sind, und M¹ und M² Alkalimetallionen und/oder Ammoniumionen sein können, erwiesen. In der allgemeinen Formel (I) bedeuten R¹ und R² bevorzugt lineare oder verzweigte Alkylreste mit 6 bis 18 C-Atomen, insbesondere mit 6, 12 und 16 C-Atomen oder Wasserstoff, wobei R¹ und R² nicht beide gleichzeitig H-Atome sind. M¹ und M² sind bevorzugt Natrium, Kalium oder Ammonium, wobei Natrium besonders bevorzugt ist. Besonders vorteilhaft sind Verbindungen (I), in denen M¹ und M² Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax^{®} 2A1 (Marke der Dow Chemical Company). Die Verbindungen (I) sind allgemein bekannt, z.B. aus US-A 4,269,749, und im Handel erhältlich.

Geeignete kationenaktive Emulgatoren sind in der Regel einen C₆- bis C₁₈-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol^{®} AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge von 0,005 bis 20 Gew.-%, vorzugsweise 0,01 bis 15 Gew.-%, insbesondere 0,1 bis 10 Gew.-%, jeweils bezogen auf die Gesamtmonomerenmenge, eingesetzt.

Die Gesamtmenge der als Dispergierhilfsmittel zusätzlich oder statt der Emulgatoren eingesetzten Schutzkolloide beträgt oft 0,1 bis 10 Gew.-% und häufig 0,2 bis 7 Gew.-%, jeweils bezogen die Gesamtmonomerenmenge.

Bevorzugt werden jedoch anionische und/oder nichtionische Emulgatoren als Dispergierhilfsmittel eingesetzt.

Erfindungsgemäß sind ethylenisch ungesättigten Monomere oder Gemische von ethylenisch ungesättigten Monomeren bevorzugt, welche eine geringe Wasserlöslichkeit aufweisen. Unter geringer Wasserlöslichkeit soll im Rahmen dieser Schrift verstanden werden, wenn das ethylenisch ungesättigte Monomere oder das Gemisch aus ethylenisch ungesättigten Monomeren bzw. das organische Lösemittel in entionisiertem Wasser bei 20°C und 1 atm (absolut) eine Löslichkeit < 50 g/ l, bevorzugt ≤ 10 g/l und vorteilhaft ≤ 5 g/l bzw. ≤ 1 g/ l, aufweist.

Für das erfindungsgemäße Verfahren geeignete gering in Wasser lösliche organische Lösemittel sind beispielsweise flüssige aliphatische und aromatische Kohlenwasserstoffe mit 5 bis 30 C-Atomen, wie beispielsweise n-Pentan und Isomere, Cyclopentan, n-Hexan und Isomere, Cyclohexan, n-Heptan und Isomere, n-Octan und Isomere, n-Nonan und Isomere, n-Decan und Isomere, n-Dodecan und Isomere, n-Tetradecan und Isomere, n-Hexadecan und Isomere, n-Octadecan und Isomere, Benzol, Toluol, Ethylbenzol, Cumol, o-, m- oder p-Xylol, Mesitylen, sowie allgemein Kohlenwasserstoffgemische im Siedebereich von 30 bis 250°C einsetzbar. Ebenfalls einsetzbar sind Hydroxyverbindungen, wie gesättigte und ungesättigte Fettalkohole mit 10 bis 28 C-Atomen, beispielsweise n-Dodecanol, n-Tetradecanol, n-Hexadecanol und deren Isomeren oder Cetylalkohol, Ester, wie beispielsweise Fettsäureester mit 10 bis 28 C-Atomen im Säureteil und 1 bis 10 C-Atomen im Alkoholteil oder Ester aus Carbonsäuren und Fettalkoholen mit 1 bis 10 C-Atomen im Carbonsäureteil und 10 bis 28 C-Atomen im Alkoholteil. Selbstverständlich ist es auch möglich, Gemische vorgenannter Lösemittel einzusetzen. Vorteilhaft wird zur Herstellung der Rohemulsion ein gering in Wasser lösliches organisches Lösemittel verwendet.

Die Gesamtmenge an gegebenenfalls verwendeten gering in Wasser löslichem organischem Lösungsmittel beträgt in der Regel bis zu 10 Gew.-%, häufig ≥ 0,01 und < 5 Gew.-% und oft ≥ 0,1 und ≤ 2 Gew.-%, jeweils bezogen auf die Gesamtmonomerenmenge.

Vorteilhaft ist es, wenn die ethylenisch ungesättigten Monomeren und das gegebenenfalls eingesetzte organische Lösemittel und deren Mengen so gewählt werden, dass die Löslichkeit der ethylenisch ungesättigten Monomeren und des gegebenenfalls eingesetzten organischen Lösemittels im wässrigen Medium der Rohemulsion vorteilhaft eine Löslichkeit ≤ 50 Gew.-% oder ≤ 40 Gew.-%, bevorzugt ≤ 30 Gew.-% und ≤ 20 Gew.-% und insbesondere bevorzugt ≤ 10 Gew.-%, jeweils bezogen auf die Gesamtmenge der zur Herstellung der Rohemulsion eingesetzten ethylenisch ungesättigten Monomeren und des gegebenenfalls eingesetzten organischen Lösemittels ist und diese somit als separate Phase im wässrigen Medium vorliegen.

Neben den ethylenisch ungesättigten Monomeren, Dispergierhilfsmitteln und Wasser, insbesondere entionisiertes Wasser, können zur Herstellung der Rohemulsion optional noch weitere Hilfsstoffe, wie beispielsweise Radikalkettenregler, Schauminhibitoren, Komplexiermittel oder biozide Verbindungen eingesetzt werden. Die Mengen dieser optional eingesetzten Hilfsstoffe beträgt jeweils ≤ 5 Gew.-%, jeweils bezogen auf die wässrige Rohemulsion.

Durch einfaches Mischen, beispielsweise unter Verwendung von üblichen Rührern, Düsen, statischen und/oder dynamischen Mischeinrichtungen wird aus den ethylenisch ungesättigten Monomeren, Dispergierhilfsmitteln, Wasser sowie den gegebenenfalls verwendeten organischen Lösemitteln und anderen Hilfsstoffen die Rohemulsion mit einem mittleren Tröpfchendurchmesser ≥ 2 µm hergestellt.

Dabei wird die mittlere Größe der Tröpfchen der dispersen Phase der wässrigen Rohemulsion und der wässrigen Miniemulsion nach dem Prinzip der quasielastischen dynamischen Lichtstreuung bestimmt (der sogenannte z-mittlere Tröpfchendurchmesser d_{z} der unimodalen Analyse der Autokorrelationsfunktion). In den Beispielen dieser Schrift wurde dazu ein Coulter N4 Plus Particle Analyser der Fa. Coulter Scientific Instruments verwendet (1 atm, 25 °C). Die Messungen wurden an verdünnten wässrigen Emulsionen vorgenommen. Dazu wurden zwischen 0,1 und 1 g der wässrigen Rohemulsion/Miniemulsion mit 1000 g Wasser verdünnt, das zuvor mit den in der wässrigen Rohemulsion/Miniemulsion enthaltenen ethylenisch ungesättigten Monomeren gesättigt worden war und dem danach 5 Gew.-% des verwendeten Dispergiermittels zugesetzt wurde. Diese Maßnahme soll verhindern, dass mit der Verdünnung eine Änderung der Tröpfchendurchmesser einhergeht.

Vorteilhaft wird die Rohemulsion aus den Hauptmengen, d.h. > 50 Gew.-%, insbesondere ≥ 80 Gew.-% oder ≥ 90 Gew.-% an Wasser, Dispergierhilfsmittel ethylenisch ungesättigten Monomeren sowie gegebenenfalls gering in Wasser löslichem organischem Lösemittel hergestellt.

Verfahrenswesentlich ist, dass die so erhaltene Rohemulsion zur Ausbildung der Monomerenminiemulsion durch wenigstens eine mikroporöse Membran mit einem mittleren Porendurchmesser ≤ 1000 nm geleitet wird.

Bei den mikroporösen Membranen mit einem mittleren Porendurchmesser ≤ 1000 nm kann es sich um herkömmliche Ultrafiltrations- und Mikrofiltrationsmembranen handeln.

Vorteilhaft basiert die mechanische Stabilität der mikroporösen Membran auf einer grobporigen ersten Schicht (Unterstruktur). Sie ist frei tragend und druckstabil, ohne dass hierfür eine Stützvorrichtung erforderlich wäre. Sie dient als Träger für eine oder mehrere mikroporöse Membranen mit einem mittleren Porendurchmesser ≤ 1000 nm. Dabei sind die jeweiligen mikroporösen Membranen mit einem mittleren Porendurchmesser ≤ 1000 nm in der Regel dünner als die Unterstruktur.

Bevorzugt sind auf der ersten grobporigen Schicht wenigstens zwei in Reihe angeordneter mikroporöse Membranen mit einem mittleren Porendurchmesser ≤ 1000 nm aufgebracht, deren mittlerer Porendurchmesser mit zunehmendem Abstand von der ersten Schicht abnimmt.

Günstig ist es, wenn die Rohemulsion zuerst durch die grobporige erste Schicht und daran anschließend durch die darauf angeordnete(n) mikroporöse(n) Membran(en) mit einem mittleren Porendurchmesser ≤ 1000 nm geleitet wird. Ein Verstopfen der mikroporösen Membran(en) wird durch einen solchen asymmetrischen Aufbau weitgehend verhindert.

Der Porendurchmesser der grobporigen ersten Schicht liegt vorteilhaft im Bereich zwischen 1 und 20 µm und ihre Dicke im Bereich von 0,1 bis 10 mm.

Ein besonders geeigneter Porendurchmesser der Unterstruktur liegt in der gleichen Größenordnung wie der Tröpfchendurchmesser der dispersen Phase der Rohemulsion, d.h. im Bereich ≥ 2 µm.

Der Porendurchmesser der mikroporösen Membran, der in einem direkten Zusammenhang zu dem erzielten Tröpfchendurchmesser der Monomerenminiemulsion und deren Tröpfchengrößenverteilung steht, liegt bevorzugt in einem Bereich ≥ 10 und ≤ 1000 nm, insbesondere ≤ 900 nm, ≤ 700 nm oder ≤ 500 nm und ≥ 50 nm, ≥ 100 nm oder ≥ 150 nm. Vorteilhaft liegt der mittlere Porendurchmesser im Bereich ≥ 50 und ≤ 800 nm oder ≥ 70 und ≤ 600 nm. Die Bestimmung des mittleren Porendurchmessers einer mikroporösen Membran erfolgt in der Regel mittels eines Coulter Porometers nach ASTM E 1294 mit Isopropanol als Netzmittel. Daneben haben geeignete mikroporöse Membranen eine Porosität nach DIN ISO 30911-3 von 1 % bis 70 %. Die Dicke einer mikroporösen Membran liegt vorteilhaft im Bereich zwischen 1 und 200 µm.

Erfindungsgemäß vorteilhaft ist es, wenn der mittlere Porendurchmesser der mit der Rohemulsion in Kontakt stehenden ersten mikroporösen Membran größer oder gleich dem mittleren Porendurchmesser der zweiten und jeder weiteren mikroporösen Membran ist. Insbesondere vorteilhaft ist es, wenn der mittlere Porendurchmesser der mit der Rohemulsion in Kontakt stehenden ersten mikroporösen Membran größer ist als der mittlere Porendurchmesser der zweiten und jeder weiteren mikroporösen Membran. Günstig ist es, wenn der mittlere Porendurchmesser jeder weiteren mikroporösen Membran mit zunehmendem Abstand von der ersten mikroporösen Membran weiter abnimmt.

Abhängig von der Emulgieraufgabe kann die mikroporöse Membran in unterschiedlichsten Geometrien und Größen eingesetzt werden. Beispielsweise sind Flachgeometrien, Rohrgeometrien und Multikanalgeometrien mit mehreren Rohrgeometrien integriert in einer Einheit, sowie Kapillar- oder Wickelgeometrien möglich. Besonders bevorzugt weist die mikroporöse Membran eine rohrförmige Geometrie mit innenliegender oder außenliegender grobporiger erster Schicht oder eine ebene Geometrie auf. Dabei sind druckstabile selbsttragende Membranstrukturen bevorzugt, die ohne zusätzliche Stützelemente eine ausreichende Druckstabilität auch bei hohen transmembranen Druckdifferenzen und Durchsätzen im Industriemaßstab gewährleisten.

Die mikroporösen Membranen können aus organischen Polymeren, Keramik, Metall, Kohlenstoff oder Kombinationen daraus bestehen. Dabei werden sie erfindungsgemäß so gewählt, dass sie gegenüber der wässrigen Rohemulsion unter Durchleitbedingungen (Druck, Temperatur) stabil sind.

Besonders bevorzugt sind mikroporöse Membranen, welche aus hydrophilen Materialien, wie beispielsweise aus Metall, Keramik, Regeneratcellulose, Acrylnitril, hydrophilisiertem Acrylnitril, hydrophilisiertem Polysulfon oder hydrophilisiertem Polyethersulfon bzw. hydrophilisiertem Polyetheretherketon aufgebaut sind (siehe hierzu beispielsweise "Ullmann's Encyclopedia of Industrial Chemistry" 6. Auflage [elektronisch]). Insbesondere bevorzugt wird wenigstens eine mikroporöse Metallmembran eingesetzt. Ein Maß für die Hydrophilie eines Stoffes ist der Kontaktwinkel eines Tropfens entionisierten Wassers auf einer waagrechten, glattflächigen und sauberen, insbesondere fettfreien Oberfläche dieses Stoffes. Im Rahmen dieser Schrift werden unter hydrophilen Stoffen solche verstanden, die einen Kontaktwinkel < 90 °, ≤ 80 ° oder ≤ 70 ° aufweisen.

Die mikroporösen Membranen können beispielsweise durch Sintern der entsprechenden Pulvermaterialien, Verstrecken der entsprechenden Polymerfilme, Bestrahlung der Polymerfilme mit hochenergetischer elektromagnetischer Strahlung, durch Ätzprozesse sowie Phasenumkehr von homogenen Polymerlösungen oder Polymerschmelzen hergestellt werden.

Auch ist es möglich, dass die mikroporöse Membran symmetrisch oder integral asymmetrisch aufgebaut ist. Unter integral asymmetrischen mikroporösen Membranen werden solche verstanden, deren mittlerer Porendurchmesser sich innerhalb der mikroporösen Membranschicht von der einen Seite zur anderen Seite um den Faktor 3 bis 1000 vergrößert.

Die Temperaturen für das erfindungsgemäße Durchleiten durch die mikroporöse Membran(en) sind grundsätzlich nicht eingeschränkt. Häufig liegen sie im Bereich ≥ 0 und ≤ 150°C, insbesondere im Bereich ≥ 10 und ≤ 80°C und oft im Bereich ≥ 20 und ≤ 60°C.

Der aufzubringende Druck, um die wässrige Rohemulsion durch die poröse Membran(en) zu leiten, wird insbesondere mittels einer Pumpe, Gasdruck oder durch hydrostatische Höhe erzeugt. Die transmembrane Druckdifferenz zwischen wässriger Rohemulsion und wässriger Miniemulsion, welche auf den mittleren Tröpfchendurchmesser und die Tröpfchengrößenverteilung Einfluss nimmt, liegt zwischen 0,1 und 1000 bar, bevorzugt zwischen 0,5 und 100 bar, besonders bevorzugt zwischen 1 und 50 bar.

Die wenigstens eine mikroporöse Membran wird daher üblicherweise in einem entsprechenden Druckgehäuse mit einer Trennung von Rohemulsions- und Miniemulsionsseite angeordnet.

Vorteilhaft ist die wenigstens eine mikroporöse Membran in der Zulaufleitung zum Polymerisationsgefäß angeordnet. Insbesondere vorteilhaft befindet sich die wenigstens eine mikroporöse Membran so nah wie technisch möglich an der Einleitöffnung der Zulaufleitung zum Polymerisationsgefäß. Vorteilhaft befindet sich die Einleitöffnung im unteren Drittel, insbesondere im Boden des Polymerisationsgefäßes.

Das erfindungsgemäße Verfahren beinhaltet die Herstellung einer wässrigen Rohemulsion mit einem mittleren Tröpfchendurchmesser ≥ 2 µm, enthaltend wenigstens Teilmengen an Wasser, Dispergierhilfsmittel, ethylenisch ungesättigtem Monomeren sowie gegebenenfalls gering in Wasser löslichem organischem Lösemittel. Dabei enthält die wässrige Rohemulsion vorteilhaft die Haupt- oder die Gesamtmengen an Dispergierhilfsmittel, ethylenisch ungesättigtem Monomeren sowie gegebenenfalls gering in Wasser löslichem organischem Lösemittel. Die wässrige Rohemulsion kann durch Mischen ihrer Einzelkomponenten in einem Rührkessel oder mittels üblichen dynamischen und/oder statischen Mischeinrichtungen hergestellt werden. Insbesondere vorteilhaft werden die Einzelkomponenten der wässrigen Rohemulsion in die Zulaufleitung zum Polymerisationsgefäß dosiert, dabei in Strömungsrichtung zum Polymerisationsgefäß mittels dynamischen und/oder statischen Mischeinrichtungen zur wässrigen Rohemulsion gemischt, unmittelbar danach durch die wenigstens eine mikroporöse Membran zur Ausbildung einer Miniemulsion und direkt danach in das Polymerisationsgefäß geleitet.

Die Durchführung der radikalinduzierten Polymerisation in wässrigem Medium erfolgt im Prinzip nach der Methode der radikalisch initiierten wässrigen Emulsionspolymerisation. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise so, dass man die ethylenisch ungesättigten Monomeren, in der Regel unter Mitverwendung von Dispergierhilfsmitteln, in wässrigem Medium dispers verteilt und mittels wenigstens eines radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide oder schaumdämpfende Additive zugesetzt. Von der Methode der radikalisch initiierten wässrigen Emulsionspolymerisation unterscheidet sich vorliegendes Verfahren im wesentlichen dadurch, dass die zur Polymerisation verwendete Miniemulsion nach Durchleiten einer wässrigen Rohemulsion durch eine mikroporöse Membran mit einem mittleren Porendurchmesser ≤ 1000 nm erhalten wurde.

Abhängig vom durchgeführten Polymerisationsverfahren, können Teilmengen an Wasser, Dispergierhilfsmittel, ethylenisch ungesättigten Monomeren und gering in Wasser löslichem Lösemittel im Polymerisationsgefäß vorgelegt, auf Polymerisationstemperatur aufgeheizt und durch Zugabe des Radikalinitiators die Polymerisation gestartet werden. In diesem Fall werden vorteilhaft die verbliebenen Restmengen an Dispergierhilfsmittel, ethylenisch ungesättigten Monomeren und gering in Wasser löslichem Lösemittel sowie die Hauptmenge an Wasser zuerst über die in Strömungsrichtung zum Polymerisationsgefäß in der Zulaufleitung angeordneten dynamischen und/oder statischen Mischeinrichtungen zur wässrigen Rohemulsion gemischt, unmittelbar danach durch die wenigstens eine mikroporöse Membran zur Ausbildung einer Miniemulsion und direkt danach in das Polymerisationsgefäß geleitet. Dabei kann es vorteilhaft sein, wenn die Monomerenminiemulsion dem Polymerisationsgefäß nach Maßgabe des Monomerenumsatzes im Polymerisationsgefäß zugeführt wird. Insbesondere vorteilhaft erfolgt die Zudosierung der Miniemulsion in das Polymerisationsgefäß unter Polymerisationsbedingungen dergestalt, dass nach Anspringen der Polymerisationsreaktion und nachdem insgesamt 10 Gew.-% der Gesamtmenge der zur Polymerisation eingesetzten ethylenisch ungesättigten Monomeren durch Polymerisation umgesetzt wurden, zu jedem Zeitpunkt ≤ 10 Gew.-%, bevorzugt < 5 Gew.-% und insbesondere bevorzugt ≤ 1 Gew.-%, der bis zu dem jeweiligen Zeitpunkt in das Polymerisationsgefäß zudosierten Menge an ethylenisch ungesättigten Monomeren in freier, d.h. nicht polymerisierter Form vorliegen, was sich anhand reaktionskalorimetrischer Messungen überprüfen lässt.

Selbstverständlich können zur Herstellung der wässrigen Polymerisatdispersionen auch Polymersaatlatices eingesetzt werden, welche im Polymerisationsgefäß vor Beginn der radikalischen Polymerisationsreaktion vorgelegt oder während der Polymerisationsreaktion zudosiert werden können. Vorteilhaft wird die Gesamtmenge der Polymersaat vor Beginn der radikalischen Polymerisationsreaktion im Polymerisationsgefäß vorgelegt.

Kennzeichnend für das erfindungsgemäße Verfahren ist, dass zur Auslösung der radikalisch induzierten Polymerisationsreaktion sowohl sogenannte wasserlösliche wie auch sogenannte öllösliche Radikalinitiatoren eingesetzt werden können. Dabei werden unter wasserlöslichen Radikalinitiatoren in der Regel alle diejenigen Radikalinitiatoren verstanden, welche üblicherweise bei der radikalisch wässrigen Emulsionspolymerisation eingesetzt werden, während unter öllöslichen Radikalinitiatoren alle diejenigen Radikalinitiatoren verstanden werden, welche der Fachmann üblicherweise bei der radikalisch initiierten Lösungspolymerisation einsetzt. Im Rahmen dieser Schrift sollen als wasserlösliche Radikalinitiatoren alle diejenigen Radikalinitiatoren verstanden werden, die bei 20°C und Atmosphärendruck (1 atm) in entionisiertem Wasser eine Löslichkeit ≥ 5 Gew.-% aufweisen, während unter öllöslichen Radikalinitiatoren alle diejenigen Radikalinitiatoren verstanden werden, die unter vorgenannten Bedingungen eine Löslichkeit ≤ 5 Gew.-% aufweisen. Häufig weisen wasserlösliche Radikalinitiatoren unter vorgenannten Bedingungen eine Wasserlöslichkeit ≥ 8 Gew.%, ≥ 10 Gew.%, oder ≥15 Gew.-%, während öllösliche Radikalinitiatoren häufig eine Wasserlöslichkeit ≤ 4 Gew.-%, ≤ 3 Gew.-%, < 2 Gew.-% oder ≤ 1 Gew.-% aufweisen.

Bei den wasserlöslichen Radikalinitiatoren kann sich dabei beispielsweise sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatischer Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Bevorzugt werden als wasserlösliche Radikalinitiatoren ein Mono- oder Di-Alkalimetall- oder Ammoniumsalz der Peroxodischwefelsäure, beispielsweise Dikaliumperoxidisulfat, Dinatriumperoxidisulfat oder Diammoniumperoxidisulfat eingesetzt. Selbstverständlich ist es auch möglich, Gemische vorgenannter wasserlöslicher Radikalinitiatoren einzusetzen.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis(tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Dicetylperoxidicarbonat, Dimyristylperoxidicarbonat, tert.-Butylperoxiisopropylcarbonat oder tert.-Butylperoxi-2-ethylhexylcarbonat.

Bevorzugt wird als öllöslicher Radikalinitiator eine Verbindung ausgewählt aus der Gruppe umfassend tert.-Butylperoxi-2-ethylhexanoat (Trigonox^{®} 21), tert.-Amylperoxi-2-ethylhexanoat, tert.-Butylperoxibenzoat (Trigonox^{®} C), tert.-Amylperoxibenzoat, tert.-Butylperoxiacetat, tert.-Butylperoxi-3,5,5-trimethylhexanoat (Trigonox^{®} 42 S), tert.-Butylperoxiisobutanoat, tert.-Butylperoxidiethylacetat, tert.-Butylperoxipivalat, tert.-Butylperoxiisopropylcarbonat, (Trigonox^{®} BPIC) und tert.-Butylperoxi-2-ethylhexylcarbonat (Trigonox^{®} 117) eingesetzt. Selbstverständlich ist es auch möglich, Gemische vorgenannter öllöslicher Radikalinitiatoren einzusetzen.

Insbesondere bevorzugt werden jedoch wasserlösliche Radikalinitiatoren in Form einer wässrigen Lösung eingesetzt.

Die Gesamtmenge an eingesetztem Radikalinitiator beträgt 0,01 bis 5 Gew.-%, häufig 0,1 bis 3 Gew.-% und oft 0,5 bis 2 Gew.-%, jeweils bezogen auf die Gesamtmonomerenmenge. Abhängig von der gewählten Polymerisationsweise kann die Gesamtmenge oder lediglich eine Teilmenge des verwendeten Radikalinitiators in dem Polymerisationsgefäß vorgelegt werden. Nach Anspringen der Polymerisationsreaktion wird dann die gegebenenfalls verbliebene Restmenge dem Polymerisationsgefäß, häufig über einen separaten Zulauf diskontinuierlich in einer oder mehreren Chargen oder vorteilhaft kontinuierlich mit gleichbleibenden oder sich veränderten Mengenstrom zugegeben.

Als Reaktionstemperatur für die radikalische Polymerisationsreaktion kommt - u.a abhängig vom verwendeten Radikalinitiator - der gesamte Bereich von 0 bis 170°C in Betracht. Dabei werden in der Regel Temperaturen von 50 bis 120°C, häufig 60 bis 110°C und oft 70 bis 100°C angewendet. Die radikalische Polymerisationsreaktion kann bei einem Druck kleiner, gleich oder größer 1 atm (absolut) durchgeführt werden, wobei die Polymerisationstemperatur 100°C übersteigen und bis zu 170°C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Polymerisationsreaktionen im Unterdruck durchgeführt, werden Drücke von 950 mbar, häufig von 900 mbar und oft 850 mbar (absolut) eingestellt. Vorteilhaft wird die radikalische Polymerisationsreaktion bei Atmosphärendruck unter Inertgasatmosphäre, beispielsweise unter Stickstoff- oder Argonatmosphäre durchgeführt.

Dabei erfolgt die radikalische Polymerisationsreaktion in der Regel bis zu einem Gesamtmonomerenumsatz von > 95 Gew.-%, vorteilhaft ≥ 97 Gew.-% und bevorzugt ≥ 98 Gew.-%.

Die Polymerisatteilchen der nach dem erfindungsgemäßen Verfahren zugänglichen wässrigen Polymerisatdispersionen weisen in der Regel mittlere Teilchendurchmesser auf, welche zwischen 10 und 1000 nm, häufig zwischen 50 und 700 nm und oft zwischen 100 und 500 nm liegen. Die Bestimmung der mittleren Teilchengrößen bzw. der Teilchengrößenverteilung erfolgte im Rahmen dieser Schrift mittels der Methode der hydro-dynamischen Fraktionierung. Verwendet wurde ein PSDA Particle Size Distribution Analyser der Fa. Polymer Laboratories Ltd., United Kingdom, mit einer Kartusche Typ Nr. 2 bei einer Messtemperatur von 23 °C. Die Messzeit betrug 480 Sekunden, verwendet wurde ein UV-Detektor bei 254 nm. Angegeben ist jeweils das arithmetische Mittel des Volumendurchmessers.

Selbstverständlich ist es möglich, das gegebenenfalls verwendete organische Lösemittel aus der wässrigen Polymerisatdispersion nach üblichen Methoden, beispielsweise durch Strippen mit Stickstoff oder Wasserdampf bzw. durch Anlegen von Vakuum abzutrennen.

Durch das vorliegende Verfahren eröffnet sich ein einfacher Zugang zu wässrigen Monomerenemulsionen mit einem mittleren Tröpfchendurchmesser ≤ 1000 nm und deren Verwendung bei der Herstellung stabiler wässriger Polymerisatdispersionen. Auch weisen die nach dem erfindungsgemäßen Verfahren zugänglichen wässrige Polymerisatdispersionen in der Regel niedrigere Koagulatgehalte im Vergleich zu den nach konventionellen Verfahren der wässrigen Emulsionspolymerisation zugänglichen wässrigen Polymerisatdispersionen auf.

### Beispiele

Die Bestimmung der Teilchengrößenverteilung erfolgte mit Hilfe der hydro-dynamischen Fraktionierung. Verwendet wurde ein PSDA Particle Size Distribution Analyser der Fa. Polymer Laboratories Ltd., United Kingdom, mit einer Kartusche Typ Nr. 2 bei einer Messtemperatur von 23°C. Die Messzeit betrug 480 Sekunden, verwendet wurde ein UV-Detektor bei 254 nm. Gemessen wurde das arithmetische Mittel des Volumendurchmessers.

Verwendet wurde die Metallmembran SIKA-R0,1AS mit einem mittleren Porendurchmesser von 0,35 µm von GKN Sinter Metals Filters GmbH, Radevormberg, Deutschland.

Die Menge an Koagulat wurde durch Filtration der wässrigen Polymerisatdispersion über ein Polyamidgewebe mit einer Porengröße von 125 µm bestimmt. Dazu wurde der Rückstand mit Wasser gewaschen und anschließend 1 Stunde bei 120°C getrocknet.

Die Feststoffgehalte wurden bestimmt, indem eine definierte Menge (ca. 5 g) der wässrigen Polymerisatdispersion bei 140°C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Messergebnisse dar.

Die Glasübergangstemperatur wurde nach dem DSC-Verfahren mittels eines DSC-Gerät DSC822 ( Serie TA8000 ) der Fa. Mettler-Toledo, Deutschland, nach DIN 53765 bestimmt.

Alle Polymerisationsversuche wurden in einem 3 Liter Polymerisationsgefäß aus Glas, mit einem Verhältnis Höhe zu Durchmesser von 2,1, ausgerüstet mit einem Ankerrührer mit einer Rührerfrequenz von 150 Umdrehungen pro Minute durchgeführt.

Alle wässrigen Rohemulsionen wurden in einem 3 Liter Emulgiergefäß aus Glas, mit einem Verhältnis Höhe zu Durchmesser von 2,1, ausgerüstet mit einem Ankerrührer mit einer Rührerfrequenz von 150 Umdrehungen pro Minute, hergestellt.

### Beispiel 1

Die Rohemulsion wurde bei 20 bis 25°C (Raumtemperatur) unter Stickstoffatmosphäre im Emulgiergefäß hergestellt. Dabei wurden 1200 g vollentionisiertes Wasser vorgelegt, anschließend 6,6 g einer 15 gew.-%igen wässrigen Lösung von Natriumlaurylsulfat und danach eine Lösung, bestehend aus 200 g Styrol, 200 g Stearylacrylat und 2 g Hexadecan zugegeben. Die erhaltene Mischung wurde 3 Minuten gerührt.

Anschließend wurde die erhaltene Rohemulsion mit einem Stickstoffdruck von 3 bar (Überdruck) innerhalb von 10 Minuten durch die Metallmembran SIKA-R0,1AS in das Polymerisationsgefäß gedrückt.

Anschließend wurde die erhaltene Monomerenminiemulsion im Reaktionsgefäß unter Stickstoffatmosphäre mit 150 Umdrehungen pro Minute gerührt und innerhalb von 20 Minuten auf 85°C aufgeheizt. Daran anschließend wurde der Monomerenminiemulsion bei dieser Temperatur eine Lösung aus 4 g Natriumperoxodisulfat und 200 g entionisiertes Wasser innerhalb von 1 Stunde zudosiert und danach das Polymerisationsgemisch für weitere 2 Stunden gerührt. Danach wurde die erhaltene wässrige Polymerisatdispersion auf Raumtemperatur abgekühlt.

Die erhaltene wässrige Polymerisatdispersion wies einen Feststoffgehalt von 21,9 Gew.-% auf. Das arithmetische Mittel des Volumendurchmessers der erhaltenen Polymerisatteilchen lag bei 595 nm, die Standardabweichung des Teilchendurchmessers betrug 204 nm. Die Glasübergangstemperatur betrug 69°C.

### Vergleichsbeispiel 1

Die Durchführung des Vergleichsbeispiels 1 erfolgte analog Beispiel 1 mit der Ausnahme, dass keine mikroporöse Membran eingesetzt wurde.

Ca. 30 Minuten nach Beginn der Radikalinitiatordosierung koagulierte jedoch das Reaktionsgemisch. Eine stabile wässrige Polymerisatdispersion konnte nicht erhalten werden.

### Beispiel 2

Im Polymerisationsgefäß wurden bei Raumtemperatur unter Stickstoffatmosphäre 300 g entionisiertes Wasser und 83 g einer 33 gew.-%igen wässrigen Polystyrollatex mit einem gewichtsmittleren Teilchendurchmesser D₅₀ von 30 nm gemischt und unter Rühren auf 90°C aufgeheizt.

Anschließend gab man über zwei getrennte Zuläufe zeitgleich beginnend innerhalb von 3 Stunden Zulauf 1 und Zulauf 2 kontinuierlich in konstanten Mengenströmen unter Beibehaltung der Reaktionstemperatur in das Polymerisationsgefäß. Dabei wurde Zulauf 1 über die gesamte Zulaufzeit mittels eines Stickstoffüberdrucks, welcher im Emulgiergefäß konstant auf 2,4 bar gehalten wurde, durch eine Metallmembran SIKA-R0,1AS in das Polymerisationsgefäß gedrückt.

Nach Beendigung der Zuläufe 1 und 2 rührte man das Polymerisationsgemisch noch 30 Minuten bei 90°C, kühlte es dann auf 85°C ab und gab anschließend über getrennte Zuläufe zeitgleich beginnend eine Lösung aus 8 g tert.-Butylhydroperoxid und 80 g entionisiertem Wasser sowie eine Lösung, bestehend aus 3,5 g Aceton, 5,7 g Natriumhydrogensulfit und 76 g entionisiertem Wasser, kontinuierlich in konstanten Mengenströmen unter Beibehaltung der Temperatur innerhalb von 2 Stunden zu. Danach wurden dem Polymerisationsgemisch 22 g einer 25 gew.-%igen wässrigen Lösung von Natriumhydroxid innerhalb einer Minute zugegeben und die erhaltene wässrige Polymerisatdispersion auf Raumtemperatur abgekühlt.

### Zulauf 1

Die genannten Einsatzstoffe wurden in der angegebenen Reihenfolge unter Stickstoffatmosphäre und Rühren in das Emulgiergefäß gegeben und vor Beginn der Dosierung in das Polymerisationsgefäß für 10 Minuten gerührt.

| | |
|---|---|
| 490 g | entionisiertes Wasser |
| 9,9 g | einer 45 gew.-%igen wässrigen Lösung von Dowfax^{®} 2A1 |
| 23,1 g | einer 15 gew.-%igen wässrigen Lösung von Natriumdodecylbenzolsulfonat |
| 640 g | Styrol |
| 641 g | n-Butylacrylat |
| 41,0 g | Acrylsäure |
| 10,0 g | einer 25 gew.-%igen wässrigen Lösung von Natriumhydroxid |

Danach wurde 2,4 bar Stickstoffüberdruck aufgepresst und mit der Dosierung begonnen. Die Monomerenemulsion wurde während der gesamten Dosierung weiter gerührt.

Zulauf 2 bestand aus einer Lösung von 13,6 g Natriumperoxodisulfat in 230 g entionisiertem Wasser.

Der Feststoffgehalt der erhaltenen wässrigen Polymerisatdispersion wurde zu 51,1 Gew.-% bestimmt. Das arithmetische Mittel des Volumendurchmessers der Polymerisatteilchen lag bei 123 nm und die Glasübergangstemperatur wurde zu 22°C bestimmt. Die Menge an Koagulat > 125 µm betrug 0,9 g.

### Vergleichsbeispiel 2

Die Durchführung des Vergleichsbeispiels 2 erfolgte analog Beispiel 2 mit der Ausnahme, dass keine mikroporöse Membran eingesetzt wurde.

Der Feststoffgehalt der erhaltenen wässrigen Polymerdispersion wurde zu 51,3 Gew.-% bestimmt. Das arithmetische Mittel des Volumendurchmessers der Polymerisatteilchen lag bei 125 nm und die Glasübergangstemperatur wurde zu 22°C bestimmt. Die Menge an Koagulat > 125 µm betrug 1,5 g.

## Patentansprüche

1. Verfahren zur Herstellung einer wässrigen Polymerisatdispersion durch radikalisch initiierte Polymerisation wenigstens eines ethylenisch ungesättigten Monomeren in Anwesenheit eines Dispergierhilfsmittels sowie gegebenenfalls eines gering in Wasser löslichen organischen Lösemittels in einem wässrigem Medium, wobei wenigstens eine Teilmenge des ethylenisch ungesättigten Monomeren und gegebenenfalls des gering in Wasser löslichen organischen Lösemittels im wässrigen Medium als disperse Phase mit einem mittleren Tröpfchendurchmesser ≤ 1000 nm (Miniemulsion) vorliegt, **dadurch gekennzeichnet, dass** zur Herstellung der Miniemulsion zuerst eine Rohemulsion mit einem mittleren Tröpfchendurchmesser ≥ 2 µm, enthaltend wenigstens Teilmengen an Wasser, Dispergierhilfsmittel, ethylenisch ungesättigtem Monomeren sowie gegebenenfalls gering in Wasser löslichem organischem Lösemittel, hergestellt wird, welche anschließend durch wenigstens eine mikroporöse Membran mit einem mittleren Porendurchmesser ≤ 1000 nm geleitet wird.

2. Verfahren nach Anspruch 1, **dadurch gekennzeichnet, dass** die Rohemulsion aus den Hauptmengen an Wasser, Dispergierhilfsmittel, ethylenisch ungesättigten Monomeren sowie gegebenenfalls gering in Wasser löslichem organischem Lösemittel hergestellt wird.

3. Verfahren nach einem der Ansprüche 1 und 2, **dadurch gekennzeichnet, dass** die wenigstens eine mikroporöse Membran in der Zulaufleitung zum Polymerisationsgefäß angeordnet ist.

4. Verfahren nach einem der Ansprüche 1 bis 3, **dadurch gekennzeichnet, dass** wenigstens zwei in Reihe angeordnete mikroporöse Membranen eingesetzt werden.

5. Verfahren nach Anspruch 4, **dadurch gekennzeichnet, dass** der mittlere Porendurchmesser der mit der Rohemulsion in Kontakt stehenden ersten mikroporösen Membran größer oder gleich dem mittleren Porendurchmesser der zweiten und jeder weiteren mikroporösen Membran ist.

6. Verfahren nach Anspruch 4, **dadurch gekennzeichnet, dass** der mittlere Porendurchmesser der mit der Rohemulsion in Kontakt stehenden ersten mikroporösen Membran größer ist als der mittlere Porendurchmesser der zweiten und jeder weiteren mikroporösen Membran.

7. Verfahren nach einem der Ansprüche 3 bis 6, **dadurch gekennzeichnet, dass** die Rohemulsion durch Mischen ihrer Komponenten mittels dynamischen und/oder statischen Mischeinrichtungen in der Zulaufleitung zum Polymerisationsgefäß hergestellt wird.

8. Verfahren nach einem der Ansprüche 1 bis 7, **dadurch gekennzeichnet, dass** wenigstens eine mikroporöse Metallmembran eingesetzt wird.

9. Verfahren nach einem der Ansprüche 1 bis 8, **dadurch gekennzeichnet, dass** der mittlere Porendurchmesser der wenigstens einen mikroporösen Membran > 50 und ≤ 800 nm ist.

10. Verfahren nach einem der Ansprüche 1 bis 9, **dadurch gekennzeichnet, dass** als ethylenisch ungesättigtes Monomer eine Monomerenmischung eingesetzt wird, welche zu
50 bis 99,9 Gew.-% Ester der Acryl- und/oder Methacrylsäure mit 1 bis 20 C-Atome aufweisenden Alkanolen, oder
50 bis 99,9 Gew.-% Styrol und/oder Butadien, oder
50 bis 99,9 Gew.-% Vinylchlorid und/oder Vinylidenchlorid, oder
40 bis 99,9 Gew.-% Vinylacetat, Vinylpropionat, Vinylester der Versaticsäure, Vinylester langkettiger Fettsäuren und/oder Ethylen
enthält.

## Claims

1. A process for preparing an aqueous polymer dispersion by free-radically initiated polymerization of at least one ethylenically unsaturated monomer in the presence of a dispersing assistant and also if appropriate of a low-water-solubility organic solvent in an aqueous medium, at least a portion of the ethylenically unsaturated monomer and if appropriate of the low-water-solubility organic solvent in the aqueous medium being present in the form of a disperse phase having an average droplet diameter ≤ 1000 nm (miniemulsion), which comprises preparing the miniemulsion by first preparing a crude emulsion having an average droplet diameter ≥ 2 µm, comprising at least portions of water, dispersing assistant, ethylenically unsaturated monomer, and, if appropriate, low-water-solubility organic solvent, and subsequently passing said crude emulsion through at least one microporous membrane having an average pore diameter ≤ 1000 nm.

2. The process according to claim 1, wherein the crude emulsion is prepared from the major amounts of water, dispersing assistant, ethylenically unsaturated monomer, and, if appropriate, low-water-solubility organic solvent.

3. The process according to either of claims 1 and 2, wherein the at least one microporous membrane is disposed in the feedline to the polymerization vessel.

4. The process according to any one of claims 1 to 3, wherein at least two microporous membranes disposed in series are used.

5. The process according to claim 4, wherein the average pore diameter of the first microporous membrane in contact with the crude emulsion is greater than or equal to the average pore diameter of the second and any further microporous membrane.

6. The process according to claim 4, wherein the average pore diameter of the first microporous membrane in contact with the crude emulsion is greater than the average pore diameter of the second and any further microporous membrane.

7. The process according to any one of claims 3 to 6, wherein the crude emulsion is prepared in the feedline to the polymerization vessel by mixing of its components by means of dynamic and/or static mixing means.

8. The process according to any one of claims 1 to 7, wherein at least one microporous metal membrane is used.

9. The process according to any one of claims 1 to 8, wherein the average pore diameter of the at least one microporous membrane is > 50 and ≤ 800 nm.

10. The process according to any one of claims 1 to 9, wherein as ethylenically unsaturated monomer use is made of a monomer mixture comprising
50% to 99.9% by weight of esters of acrylic and/or methacrylic acid with alkanols containing 1 to 20 carbon atoms, or
50% to 99.9% by weight of styrene and/or butadiene, or
50% to 99.9% by weight of vinyl chloride and/or vinylidene chloride, or
40% to 99.9% by weight of vinyl acetate, vinyl propionate, vinyl esters of Versatic acid, vinyl esters of long-chain fatty acids and/or ethylene.

## Revendications

1. Procédé de fabrication d'une dispersion polymère aqueuse par polymérisation initiée par voie radicalaire d'au moins un monomère éthyléniquement insaturé en présence d'un adjuvant de dispersion et éventuellement d'un solvant organique faiblement soluble dans l'eau dans un milieu aqueux, au moins une partie du monomère éthyléniquement insaturé et éventuellement du solvant organique faiblement soluble dans l'eau se présentant dans le milieu aqueux sous la forme d'une phase dispersée ayant un diamètre de goutte moyen ≤ 1 000 nm (miniémulsion), **caractérisé en ce que** pour fabriquer la miniémulsion, une émulsion brute ayant un diamètre de goutte moyen ≥ 2 µm, contenant au moins des parties d'eau, d'adjuvant de dispersion, de monomère éthyléniquement insaturé et éventuellement de solvant organique faiblement soluble dans l'eau, est tout d'abord fabriquée, puis est passée au travers d'au moins une membrane microporeuse ayant un diamètre de pore moyen ≤ 1 000 nm.

2. Procédé selon la revendication 1, **caractérisé en ce que** l'émulsion brute est fabriquée à partir des majorités d'eau, d'adjuvant de dispersion, de monomères éthyléniquement insaturés et éventuellement de solvant organique faiblement soluble dans l'eau.

3. Procédé selon l'une quelconque des revendications 1 et 2, **caractérisé en ce que** la ou les membranes microporeuses sont placées dans la conduite d'alimentation de la cuve de polymérisation.

4. Procédé selon l'une quelconque des revendications 1 à 3, **caractérisé en ce qu'**au moins deux membranes microporeuses placées en série sont utilisées.

5. Procédé selon la revendication 4, **caractérisé en ce que** le diamètre de pore moyen de la première membrane microporeuse en contact avec l'émulsion brute est supérieur ou égal au diamètre de pore moyen de la seconde membrane microporeuse et de chaque membrane microporeuse supplémentaire.

6. Procédé selon la revendication 4, **caractérisé en ce que** le diamètre de pore moyen de la première membrane microporeuse en contact avec l'émulsion brute est supérieur au diamètre de pore moyen de la seconde membrane microporeuse et de chaque membrane microporeuse supplémentaire.

7. Procédé selon l'une quelconque des revendications 3 à 6, **caractérisé en ce que** l'émulsion brute est fabriquée par mélange de ses composants au moyen de dispositifs de mélange dynamiques et/ou statiques dans la conduite d'alimentation de la cuve de polymérisation.

8. Procédé selon l'une quelconque des revendications 1 à 7, **caractérisé en ce qu'**au moins une membrane métallique microporeuse est utilisée.

9. Procédé selon l'une quelconque des revendications 1 à 8, **caractérisé en ce que** le diamètre de pore moyen de la ou des membranes microporeuses est ≥ 50 et ≤ 800 nm.

10. Procédé selon l'une quelconque des revendication 1 à 9, **caractérisé en ce qu'**un mélange de monomères qui contient
50 à 99,9 % en poids d'esters de l'acide acrylique et/ou méthacrylique avec des alcanols comportant 1 à 20 atomes C, ou
50 à 99,9 % en poids de styrène et/ou de butadiène, ou
50 à 99,9 % en poids de chlorure de vinyle et/ou de chlorure de vinylidène, ou
40 à 99,9 % en poids d'acétate de vinyle, de propionate de vinyle, d'ester vinylique de l'acide versatique, d'esters vinyliques d'acides gras à longue chaîne et/ou d'éthylène
est utilisé en tant que monomère éthyléniquement insaturé.
